**Europäisches Patentamt**

**European Patent Office**

**Office européen des brevets**

(11) Veröffentlichungsnummer: **0 005 203**
**B1**

(12) **EUROPÄISCHE PATENTSCHRIFT**

(45) Veröffentlichungstag der Patentschrift:
**29.04.81**

(21) Anmeldenummer: **79101152.1**

(22) Anmeldetag: **17.04.79**

(51) Int. Cl.³: **C 02 F 1/02**

(54) Verfahren zur Aufarbeitung von Nitro-hydroxy-aromaten enthaltenden Abwässern.

(30) Priorität: **27.04.78 DE 2818680**

(43) Veröffentlichungstag der Anmeldung:
**14.11.79 Patentblatt 79/23**

(45) Bekanntmachung des Hinweises auf die Patenterteilung:
**29.04.81 Patentblatt 81/17**

(84) Benannte Vertragsstaaten:
**BE CH DE FR GB IT NL SE**

(56) Entgegenhaltungen:
**DE-A-2 553 840**
**DE-A-2 616 054**
**GB-A-1 467 936**
**US-A-3 844 914**
**CHEMICAL ABSTRACTS, Vol. 85, Nr. 10, 6. September 1976**
**Columbus, Ohio, USA,**
**Zusammenfassung Nr. 67 578 t**
**R. B. KIM et al.: »Adsorption of organic compounds by synthetic resins«**

(73) Patentinhaber: **BAYER AG, Zentralbereich Patente, Marken und Lizenzen, D-5090 Leverkusen 1, Bayerwerk (DE)**

(72) Erfinder: **Larbig, Wolfgang, Dr., Buschstrasse 151, D-4150 Krefeld (DE)**

## Verfahren zur Aufarbeitung von Nitro-hydroxy-aromaten enthaltenden Abwässern

Die Erfindung betrifft ein Verfahren zur Aufarbeitung von Nitro-hydroxy-aromaten enthaltenden Abwässern, wie sie z. B. bei der Nitrierung von aromatischen Verbindungen oder bei der Herstellung von Nitro-hydroxyaromaten anfallen.

Es ist bekannt, daß man organische Verbindungen enthaltende Abwässer durch Extraktion oder durch Naßoxidation (Naßverbrennung) reinigen und aufarbeiten kann (zur Naßverbrennung organischer Abwässer siehe E. Schmitt, Berichte der Abwasser-technischen Vereinigung e. V., Heft 8, Verlag R. Oldenburg, München 1957). Das Extraktionsverfahren ist apparativ aufwendig und daher weniger wirtschaftlich. Bei der Naßoxidation gelingt der Abbau der Nitro-hydroxy-aromaten in den Abwässern nur zum Teil. Die Konzentration der verbleibenden, bakterizid-wirkenden Nitro-hydroxy-aromaten in den Abwässern der Naßoxidation ist für eine sich anschließende biologische Aufarbeitung zu hoch.

Es wurde nun ein Verfahren zur Aufarbeitung von Nitrohydroxy-aromaten enthaltenden Abwässern gefunden, das dadurch gekennzeichnet ist, daß man die Abwässer, die die Nitro-hydroxy-aromaten in Form ihrer wasserlöslichen Salze enthalten, unter Luft- und Sauerstoffausschluß auf Temperaturen im Bereich von 150 bis 500° C unter Druck erhitzt.

Durch das erfindungsgemäße Verfahren wird es ermöglicht, den Gehalt an Nitro-hydroxy-aromaten in den Abwässern, wie sie z. B. bei der Nitrierung von aromatischen Verbindungen und bei der Herstellung von Nitro-hydroxy-aromaten anfallen, auf Werte unter 20 ppm zu senken. Dadurch können die Abwässer zur weiteren Aufbereitung einer biologischen Kläranlage zugeführt werden, ohne daß dort die Mikroorganismen durch die bakterizid-wirkenden Nitro-hydroxy-aromaten abgetötet würden.

Die Konstitution und Zusammensetzung der in den Abwässern befindlichen Nitro-hydroxy-aromaten hängt von den jeweils zur Nitrierung eingesetzten aromatischen Verbindungen ab. Die allgemeine Anwendung des erfindungsgemäßen Verfahrens zur Aufarbeitung von Nitro-hydroxy-aromaten enthaltenden Abwässern wird durch die Konstitution und Zusammensetzung der Nitro-hydroxy-aromaten in den Abwässern nicht eingeschränkt.

Beispielsweise seien folgende Nitro-hydroxy-aromaten, die auch in Form ihrer wasserlöslichen Salze vorliegen können, genannt: Mono-, Di- und Tri-nitrophenole, Mono-, Di- und Trinitrokresole, Mono-, Di- und Tri-nitroresorcine Mono-, Di- und Trixylenole.

Als Salzbildner kommen alle Metalle in Betracht, die mit den Nitro-hydroxy-aromaten wasserlösliche Salze zu bilden vermögen. Bevorzugt seien die Alkalimetalle genannt, z. B. Lithium, Natrium, Kalium, Rubidium.

Damit ein reibungsloser Ablauf des erfindungsgemäßen Verfahrens gewährleistet ist, sollte die Menge der sich in den Abwässern befindlichen Nitro-hydroxy-aromaten bzw. deren Salze so bemessen sein, daß noch eine vollständige Lösung der Nitro-hydroxy-aromaten bzw. deren Salze in den Abwässern möglich ist. Die Menge der Nitro-hydroxy-aromaten in den Abwässern kann dabei leicht analytisch, z. B. durch Titration mit Kaliumpermanganat oder HPLC (High Pressure Liquid Chromatography) ermittelt werden.

Die Aufarbeitung der Nitro-hydroxy-aromaten enthaltenden Abwässer kann in einem Druckbehälter und/oder Röhrenreaktor bei Temperaturen im Bereich von etwa 150 bis etwa 500° C, bevorzugt bei 200 bis 350° C, durchgeführt werden, wobei auf Luft- und Sauerstoffausschluß besonders zu achten ist. Dabei kann es zweckmäßig sein, die Apparatur vorher mit einem Inertgas durchzuspülen.

Es ist auch möglich die Abwässer unter Inertgasatmosphäre bzw. unter einem Inertgas-Vordruck von beispielsweise 0,1 bis 100 bar zu erhitzen. Als Inertgase kommen z. B. Stickstoff und/oder Argon in Frage.

Je nach Temperatur und gegebenenfalls Inertgas-Vordruck stellen sich beim Erhitzen der Abwässer Drucke im Bereich von etwa 50 bis etwa 350 bar ein.

Beim Erhitzen der Abwässer unter Druck werden die in den Abwässern befindlichen Nitro-hydroxy-aromaten abgebaut. Die Konzentration der Nitro-hydroxy-aromaten in den Abwässern läßt sich nach dem erfindungsgemäßen Verfahren auf Werte unter 20 ppm, bevorzugt unter 10 ppm, drücken.

Je nach Reaktionsbedingungen und vorhandenen Nitro-hydroxy-aromaten werden zum Abbau der Nitro-hydroxy-aromaten etwa 5 bis 120 Minuten, in den meisten Fällen 15 bis 30 Minuten, benötigt.

Das erfindungsgemäße Verfahren kann wie folgt durchgeführt werden: Eine wäßrige, basisch reagierende Ablauge aus dem im Anschluß an die Benzol-Nitrierung durchgeführten Waschprozeß, enthaltend ca. 3100 ppm Natriumsalz von Mono-, Di- und Trinitrophenol neben 0,25 Gew.-% freiem Natriumhydroxyd und 0,5 Gew.-% Natriumsulfat, 1,8 Gew.-% Natriumnitrat, 0,04 Gew.-% Natriumnitrit und 0,05 Gew.-% Natriumcarbonat wird in einem Druckbehälter und/oder Röhrenreaktor der mit Stickstoff gespült ist und unter einem Stickstoffvordruck von 30 bar steht, unter Rühren auf eine Reaktionstemperatur von 300° C gebracht, wobei sich ein Druck von 120 bar einstellt. Nach 15 Minuten Verweilzeit bei dieser Temperatur — nicht eingerechnet die Aufheiz- und Abkühlzeit — wird über einen Wärmetauscher auf Raumtemperatur abgekühlt und die Lauge entnommen. Die Analyse nach dieser Behandlung ergab: 3,5 ppm an Natriumsalzen der Mono-, Di- und Triphenole, 0,1 Gew.-% freies Natriumhydroxyd, 0,5 Gew.-% Natriumsulfat, 0,5 Gew.-% Natriumnitrit, 2,0 Gew.-% Natriumnitrat und 0,14 Gew.-% Natriumcarbonat. Die Ablauge wurde unverdünnt in eine biologische Kläranlage geleitet und konnte dort ohne jede Störung aufbereitet werden.

Das erfindungsgemäße Verfahren zeichnet sich durch folgende Vorteile gegenüber anderen Verfahren zur Aufarbeitung von Abwässern aus z. B. Nitrierprozessen oder der Herstellung von Nitro-hydroxy-aromaten aus:

Das erfindungsgemäße Verfahren ist apparativ einfacher, benötigt weniger Energie und ist damit wesentlich kostengünstiger als die üblichen Extraktionsverfahren. Die Abwässer brauchen nicht von Extraktionsmitteln befreit zu werden und die Extraktionsmittel müssen nicht aufgearbeitet werden. Dadurch fallen keine Stoffe oder konzentrierte Extrakte an, die sicherheitstechnisch bedenklich sind und nachfolgend besonders vernichtet werden müßten.

Weiterhin ist das erfindungsgemäße Verfahren kostengünstiger als das sehr viel Energie verbrauchende Verfahren der direkten Abwasserverbrennung.

Im Vergleich zu der Naßoxidation, die einen Abbau der Nitro-hydroxy-aromaten auf Werte unter 20 ppm nicht erreicht, können die Werte beim erfindungsgemäßen Verfahren überraschenderweise bei gleichen oder kürzeren Reaktionszeiten auf weit unter 20 ppm gebracht werden, wodurch eine biologische Nachbehandlung der Abwässer überhaupt erst möglich wird.

Die nach dem erfindungsgemäßen Verfahren vorbehandelten Abwässer können ohne Verdünnung direkt der biologischen Kläranlage zugeleitet werden.

Vorteilhaft beim erfindungsgemäßen Verfahren ist außerdem, daß eine Abscheidung von Schmutz oder Crackprodukten an den Wärmetauscher- bzw. Reaktorwänden vermieden wird.

Die folgenden Beispiele dienen der Verdeutlichung des erfindungsgemäßen Verfahrens:

### Beispiel 1 (Vergleichsversuch)

In einen Zweiliter-Autoklaven mit Rührer, Druck- und Temperaturmessung werden 1200 ml einer wäßrig-alkalischen Ablauge aus einem Nitrierprozeß mit einem Gehalt von:

| | |
|---|---|
| 3100 ppm | Natriumsalze der Mono-, Di- und Trinitrophenole, |
| 0,25 Gew.-% | Natriumhydroxyd, |
| 0,5 Gew.-% | Natriumsulfat, |
| 1,8 Gew.-% | Natriumnitrat, |
| 0,04 Gew.-% | Natriumnitrit und |
| 0,05 Gew.-% | Natriumcarbonat |

gefüllt. Anschließend wird Luft mit einem Druck von 15 bar aufgepreßt. Dann wird auf 300° C aufgeheizt und 15 Minuten bei Reaktionstemperatur belassen. Es resultiert ein Druck von 90 bar. Nach dem Abkühlen wird die Ablauge dem Autoklaven entnommen. Die Analyse ergibt folgende Werte:

| | |
|---|---|
| 580 ppm | Natriumsalze der Mono-, Di- und Trinitrophenole, |
| 0,17 Gew.-% | Natriumhydroxyd, |
| 0,5 Gew.-% | Natriumsulfat, |
| 1,9 Gew.-% | Natriumnitrat, |
| 0,05 Gew.-% | Natriumnitrit und |
| 0,12 Gew.-% | Natriumcarbonat. |

Es zeigte sich, daß diese Ablauge biologisch nicht aufbereitet werden kann.

### Beispiel 2

Die im Beispiel 1 eingesetzte Ablauge wurde im Zweiliter-Autoklaven analog Beispiel 1 behandelt, jedoch wurde der Autoklav vorher mit Stickstoff gespült und anstelle von Luft werden 30 bar Stickstoff aufgedrückt. Danach wird unter Rühren wieder auf 300° C aufgeheizt und 15 Minuten bei Reaktionstemperatur gehalten. Der Druck steigt hierbei auf 114 bar. Nach dem Abkühlen und Entnahme der Lauge wurden diese analysiert. Man erhielt folgende Werte:

| | |
|---|---|
| 2,6 ppm | Natriumsalze der Mono-, Di- und Trinitrophenole, |
| 0,12 Gew.-% | Natriumhydroxyd, |
| 0,5 Gew.-% | Natriumsulfat, |
| 2,1 Gew.-% | Natriumnitrat, |
| 0,05 Gew.-% | Natriumnitrit und |
| 0,2 Gew.-% | Natriumcarbonat. |

Es zeigte sich, daß die Ablauge gut und störungsfrei ohne weitere Verdünnung biologisch aufgearbeitet werden kann.

### Beispiel 3

Eine Ablauge mit:

| | |
|---|---|
| 4300 ppm | Natriumsalzen der Mono-, Di- und Trinitrophenole, |
| 0,5 Gew.-% | Natriumhydroxyd, |
| 0,5 Gew.-% | Natriumsulfat, |
| 1,7 Gew.-% | Natriumnitrat, |
| 0,04 Gew.-% | Natriumnitrit und |
| 0,05 Gew.-% | Natriumcarbonat |

wird im Autoklaven genauso behandelt, wie in Beispiel 2 beschrieben. Die anschließende Ablaugeanalyse ergibt:

| | |
|---|---|
| 1,8 ppm | Natriumsalze der Mono-, Di- und Trinitrophenole, |
| 0,30 Gew.-% | Natriumhydroxyd, |
| 0,5 Gew.-% | Natriumsulfat, |
| 2,2 Gew.-% | Natriumnitrat, |
| 0,08 Gew.-% | Natriumnitrit und |
| 0,3 Gew.-% | Natriumcarbonat. |

Die Ablauge ist unverdünnt für die biologische Aufbereitung zu verwenden.

### Beispiel 4

Eine Ablauge aus einem Nitrierprozeß mit

| | |
|---|---|
| 1980 ppm | Natriumsalzen der Mono-, Di- und Trinitrokresole, |
| 0,4 Gew.-% | Natriumhydroxyd, |
| 0,4 Gew.-% | Natriumsulfat, |
| 1,7 Gew.-% | Natriumnitrat, |
| 0,03 Gew.-% | Natriumnitrit und |
| 0,06 Gew.-% | Natriumcarbonat |

wird wiederum unter Stickstoff, wie in Beispiel 2 beschrieben, im Autoklaven auf 300°C erhitzt, wobei sich ein Druck von 109 bar einstellt. Nach 15 Minuten Verweilzeit wird abgekühlt und die aus dem Autoklaven entnommene Ablauge analytisch untersucht:

| | |
|---|---|
| 0,4 ppm | Natriumsalze der Mono-, Di- und Trinitrokresole, |
| 0,35 Gew.-% | Natriumhydroxyd, |
| 0,4 Gew.-% | Natriumsulfat, |
| 1,9 Gew.-% | Natriumnitrat, |
| 0,03 Gew.-% | Natriumnitrit und |
| 0,16 Gew.-% | Natriumcarbonat. |

Auch diese Ablauge kann unverdünnt in einer biologischen Kläranlage aufbereitet werden.

### Beispiel 5

Eine Ablauge aus einem Xylol-Nitrierprozeß mit

| | |
|---|---|
| 2600 ppm | Natriumsalzen der Mono-, Di- und Trinitroxylenole und Mono-, Di- und Trinitrokresole |
| 0,45 Gew.-% | Natriumhydroxyd |
| 0,5 Gew.-% | Natriumsulfat |
| 1,6 Gew.-% | Natriumnitrat |
| 0,03 Gew.-% | Natriumnitrit und |
| 0,35 Gew.-% | Natriumcarbonat |

wird unter Stickstoff, wie in Beispiel 2 beschrieben, im Autoklaven auf 290°C erhitzt, wobei sich ein Druck von 101 bar einstellt. Nach 15 Minuten Verweilzeit wird abgekühlt und die erhaltene Ablauge analytisch untersucht:

| | |
|---|---|
| 0,3 ppm | Natriumsalze der Mono-, Di- und Trinitroxylenole und Mono-, Di- und Trinitrokresole |
| 0,3 Gew.-% | Natriumhydroxyd |
| 0,5 Gew.-% | Natriumsulfat |
| 1,7 Gew.-% | Natriumnitrat |
| 0,03 Gew.-% | Natriumnitrit und |
| 0,45 Gew.-% | Natriumcarbonat |

### Beispiel 6

Eine Ablauge aus einem Xylol-Nitrierungsprozeß mit

| | |
|---|---|
| 3100 ppm | Natriumsalzen der Mono-, Di- und Trinitroxylenole, Mono-, Di- und Trinitrokresole und Mono-, Di- und Trinitroresorcine |
| 0,5 Gew.-% | Natriumhydroxyd |
| 0,6 Gew.-% | Natriumsulfat |
| 1,9 Gew.-% | Natriumnitrat |
| 0,04 Gew.-% | Natriumnitrit und |
| 0,3 Gew.-% | Natriumcarbonat |

wird unter Stickstoff, wie in Beispiel 2 beschrieben, im Autoklaven auf 310°C erhitzt, wobei sich ein Druck von 116 bar einstellt. Nach 15 Minuten Verweilzeit wird abgekühlt und die aus dem Autoklaven abgefüllte Ablauge analysiert:

| | |
|---|---|
| 0,8 ppm | Natriumsalze der Mono-, Di- und Trinitroxylenole, Mono-, Di- und Trinitrokresole und Mono-, Di- und Trinitroresorcine |
| 0,35 Gew.-% | Natriumhydroxyd |
| 0,6 Gew.-% | Natriumsulfat |
| 2,1 Gew.-% | Natriumnitrat |
| 0,04 Gew.-% | Natriumnitrit und |
| 0,45 Gew.-% | Natriumcarbonat |

### Patentansprüche

1. Verfahren zur Aufarbeitung von Nitro-hydroxy-aromaten enthaltenden Abwässern, dadurch gekennzeichnet, daß man die Abwässer, die die Nitro-hydroxy-aromaten in Form ihrer wasserlöslichen Salze enthalten, unter Luft- und Sauerstoffausschluß auf Temperaturen im Bereich von 150 bis 500°C unter Druck erhitzt.

2. Verfahren nach Anspruch 1, dadurch gekennzeichnet, daß man die Abwässer unter Inertgasatmosphäre erhitzt.

3. Verfahren nach Anspruch 2, dadurch gekennzeichnet, daß man als Inertgase Stickstoff und/oder Argon verwendet.

4. Verfahren nach Ansprüchen 1 bis 3, dadurch gekennzeichnet, daß man im Druckbereich von 50 bis 350 bar arbeitet.

### Claims

1. Process for working up effluents containing nitro-hydroxy-aromatic compounds, characterised in that the effluents, which contain the nitro-hydroxy-aromatic compounds in the form of their water-soluble salts, are heated to temperatures in the range from 150°C to 500°C, with the exclusion of air and oxygen and under pressure.

2. Process according to claim 1, characterised in that the effluents are heated under an inert gas atmosphere.

3. Process according to claim 2, characterised in that nitrogen and/or argon are used as the inert gases.

4. Process according to claims 1 to 3, characterised in that the reaction is carried out in the pressure range from 50 to 350 bars.

## Revendications

1. Procédé de traitement d'eaux résiduaires contenant des composés aromatiques nitrohydroxylés, caractérisé en ce qu'on chauffe sous pression à l'abri de l'air et de l'oxygène à des températures dans l'intervalle de 150 à 500°C les eaux résiduaires qui contiennent les composés aromatiques nitrohydroxylés sous la forme de leurs sels solubles dans l'eau.

2. Procédé selon la revendication 1, caractérisé en ce qu'on chauffe les eaux résiduaires en atmosphère de gaz inerte.

3. Procédé selon la revendication 2, caractérisé en ce qu'on utilise comme gaz inertes de l'azote et/ou de l'argon.

4. Procédé selon l'une quelconque des revendications 1 à 3, caractérisé en ce qu'on opère dans l'intervalle de pression de 50 à 350 bars.